# DEMANDE DE BREVET EUROPEEN

(11) **EP 3 616 989 A1**
(43) Date de publication de la demande: **04.03.2020**
(21) Numéro de dépôt: 18191097.7
(22) Date de dépôt: 28.08.2018
(51) Int. Cl.: B60Q 1/04, B60Q 1/08, B60Q 1/12, B60Q 1/14

(54) **DISPOSITIF D'ÉCLAIRAGE ACTIF PORTABLE OU PLACÉ SUR UN VÉHICULE**

(71) Demandeur: The Swatch Group Research and Development Ltd, 2074 Marin (CH)
(72) Inventeur: Matthey, Olivier, 1422 Grandson (CH); Willemin, Michel, 2515 Prêles (CH); Scagliarini, Bruno, 1586 Vallamand (CH)
(74) Mandataire: ICB SA

(57) **Abrégé**

Le dispositif (1) d'éclairage actif d'un véhicule comprend une première optique (A) avec une première source de lumière (16) pour une illumination à grande distance, qui est contrôlée par une unité de contrôle (2), et une seconde optique (B) avec une seconde source de lumière (17) pour une illumination à courte distance, qui est contrôlée par l'unité de contrôle. Il comprend un capteur de lumière (3) pour déterminer l'intensité lumineuse d'un endroit où se situe le véhicule et permettre à l'unité de contrôle d'adapter l'intensité lumineuse des sources de lumière, si elles sont activées et si l'intensité de lumière ambiante est en dessous d'un seuil de lumière déterminé. De plus, il est prévu un capteur de vitesse (4a, 4b) pour déterminer la vitesse du véhicule en utilisation sur un chemin, pour que l'unité de contrôle commande l'activation de la première source de lumière à partir d'au moins un seuil de vitesse déterminé. Il est aussi prévu un détecteur d'orientation (5a, 5b, 5c) pour orienter les sources de lumière dépendant d'une courbe effectuée par le véhicule en utilisation.

## Description

### DOMAINE TECHNIQUE DE L'INVENTION

L'invention concerne un dispositif d'éclairage actif portable ou placé sur un véhicule à au moins une roue, tel qu'un vélo. De préférence, chaque dispositif d'éclairage dispose d'une première optique à au moins une première source de lumière, et d'une seconde optique à au moins une seconde source de lumière, qui sont placés en partie sur le véhicule.

### ETAT DE LA TECHNIQUE

Pour éclairer de manière adéquate un chemin ou une route empruntée par un véhicule, il est connu d'utiliser un dispositif d'éclairage ayant un réglage adapté de l'intensité de la lumière générée de phares ou d'autres sources de lumière. Un tel dispositif d'éclairage peut aussi être adapté pour orienter le faisceau de lumière en fonction des virages à effectuer dans l'obscurité ou pour éviter d'éblouir un conducteur d'un véhicule à croiser sur la route.

La demande de brevet WO 2017/23293 A1 décrit un système d'illumination intelligent pour un véhicule à deux roues, tel qu'une bicyclette. Il comprend un agencement de diodes électroluminescentes LED, qui peuvent être sélectionnées indépendamment pour définir une intensité lumineuse désirée. Il est prévu aussi des moteurs pour orienter la lumière selon la hauteur ou l'inclinaison du vélo, des capteurs du mouvement ou d'intensité lumineuse, et un agencement de lumière en fonction de la vitesse du vélo. Cependant toutes les diodes LED sont orientées en même temps par les moteurs et non indépendamment l'une de l'autre. De plus, rien n'est spécifié concernant l'orientation de chaque faisceau de lumière des diodes LED pour adapter la distance de rayonnement et l'intensité de chaque diode LED en fonction de la vitesse ou de l'intensité de lumière détectée, ce qui peut constituer un inconvénient.

La demande de brevet US 2018/0020528 A1 décrit un système d'illumination intelligent pour un vélo. Un agencement de lumière peut être prévu sur la fourche avant du vélo ou aussi sur le casque de la personne à vélo. Il comprend un détecteur de mouvement pour capter l'accélération et la vitesse, et des moyens pour tourner la source de lumière en fonction d'un virage ou de la vitesse et aussi au mouvement de la tête du cycliste de telle manière à ce que le faisceau de lumière soit toujours en ligne avec la direction des yeux du cycliste en regard de la route. Cependant il n'est pas prévu d'orienter différemment deux sources de lumière pour éclairer la route en fonction de la vitesse ou de la luminosité ambiante, ce qui peut constituer un inconvénient.

Le brevet EP 3 036 149 B1 décrit un dispositif d'éclairage pour une bicyclette avec plusieurs diodes LED à disposition. Il est prévu aussi un capteur de lumière. Un élément de commande est prévu pour comparer l'accélération, l'orientation et la vitesse du cycliste selon des données de référence. Une sélection des diodes LED est aussi prévue, mais également pas pour orienter différemment au moins deux sources de lumière pour éclairer la route suivie, ce qui constitue un inconvénient.

Il est également connu par le brevet FR 2 844 759 B1, un phare gyrostable pour une moto. Des moyens sont prévus pour orienter la lumière en fonction des virages effectués notamment. Cependant, rien n'est décrit pour orienter différemment au moins deux sources de lumière pour éclairer la route suivie en tenant compte de la vitesse et de l'intensité de lumière détectée, ce qui constitue un inconvénient.

### RÉSUMÉ DE L'INVENTION

L'invention a donc pour but de pallier les inconvénients cités ci-dessus pour réaliser un dispositif d'éclairage actif portable ou placé sur un véhicule à au moins une roue facile d'utilisation et sans complication pour permettre un bon éclairage tenant compte de la vitesse ou de l'inclinaison du véhicule.

A cet effet, l'invention concerne un dispositif d'éclairage actif portable ou placé sur un véhicule à au moins une roue, qui comprend les caractéristiques des revendications indépendantes 1 ou 2.

Des formes d'exécution particulières du dispositif d'éclairage sont définies dans les revendications dépendantes 3 à 14.

Un avantage du dispositif d'éclairage selon l'invention réside dans le fait qu'un capteur de lumière du dispositif détecte l'intensité de la lumière ambiante de manière à activer la ou les sources de lumière des optiques A et B, si l'intensité de lumière ambiante est en dessous d'un seuil de lumière déterminé. L'activation des sources de lumière peut se faire de manière automatique sur commande d'une unité de contrôle alimentée par une source de tension d'alimentation, telle qu'une batterie.

Avantageusement, l'intensité de lumière des sources de lumière activées est gérée par l'unité de contrôle inversement proportionnelle à l'intensité de la lumière ambiante.

Avantageusement, un capteur de vitesse est prévu dans le dispositif d'éclairage pour activer la source de lumière de l'optique A uniquement si une vitesse du véhicule en utilisation dépasse un seuil de vitesse déterminé. La source de lumière de l'optique B peut être activée dès que l'intensité de lumière ambiante est en dessous du seuil de lumière déterminé, et indépendamment de la vitesse du véhicule.

Avantageusement, au moins un détecteur d'orientation ou d'inclinaison peut aussi être prévu dans le dispositif d'éclairage pour orienter les sources de lumière en fonction d'un virage effectué par le véhicule.

### BRÈVE DESCRIPTION DES FIGURES

Les buts, avantages et caractéristiques d'un dispositif d'éclairage actif portable ou placé sur un véhicule à au moins une roue, apparaîtront mieux dans la description suivante sur la base d'au moins une forme d'exécution non limitative illustrée par les dessins sur lesquels:
- la figure 1 représente un schéma bloc simplifié des composants du dispositif d'éclairage actif selon l'invention,
- la figure 2 représente un schéma bloc d'une forme d'exécution du dispositif d'éclairage actif pour l'activation des sources de lumière des deux optiques A et B en fonction de la vitesse du véhicule sur une route ou un chemin selon l'invention,
- la figure 3 représente un schéma bloc d'une autre forme d'exécution du dispositif d'éclairage actif pour l'orientation des sources de lumière des optiques A et B lors de la prise d'un virage sur une route ou un chemin selon l'invention,
- la figure 4 représente schématiquement un véhicule sur une route ou en chemin avec les sources de lumière activées des deux optiques A et B du dispositif d'éclairage actif en tenant compte de l'intensité de lumière et de la vitesse mesurée pour orienter le faisceau de lumière de l'optique A selon l'invention, et
- les figures 5a, 5b et 5c montrent schématiquement un véhicule sur une route ou un chemin prenant un virage pour orienter les sources de lumière des optiques A et B du dispositif d'éclairage actif selon l'invention.

### DESCRIPTION DETAILLEE DE L'INVENTION

Dans la description suivante, il est fait référence à un dispositif d'éclairage actif portable ou placé sur un véhicule à au moins une roue. Tous les composants électroniques, qui sont bien connus d'un homme du métier dans ce domaine technique, ne sont décrits que de manière simplifiée. Le véhicule peut être par exemple un vélo à deux roues de manière à être mis en mouvement par un utilisateur sur un chemin, par exemple sur une route ou en forêt.

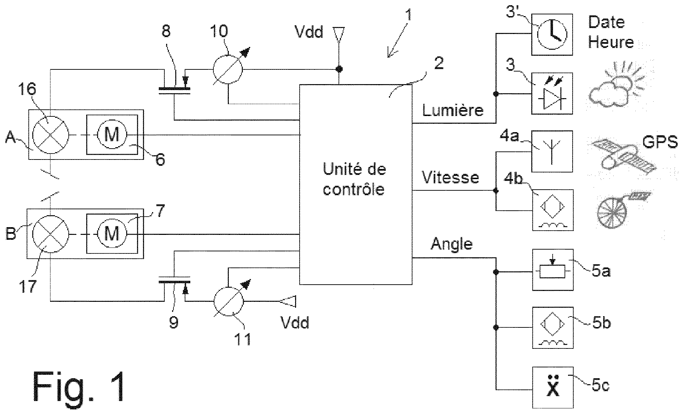

La figure 1 représente de manière simplifiée les différents composants d'un dispositif 1 d'éclairage actif portable ou placé sur un véhicule, qui peut être par exemple un vélo. Le dispositif 1 d'éclairage comprend principalement deux optiques référencées A et B. La première optique A comprend au moins une première source de lumière 16, alors que la seconde optique B comprend au moins une seconde source de lumière 17. La première source de lumière 16 est prévue pour une illumination à grande distance et de préférence à intensité variable. La seconde source de lumière 17 est prévue pour une illumination à courte distance et de préférence à intensité variable.

Chaque source de lumière 16, 17 est une diode électroluminescente ou un groupement de diodes électroluminescentes sélectionnables par l'unité de contrôle 2 ou toutes activables en même temps.

Généralement, chaque optique A et B comprend encore en plus des sources de lumière 16, 17, un agencement de lentilles et miroirs non représenté pour la fourniture d'un faisceau de lumière, ainsi qu'un moyen d'entraînement 6, 7 composé d'un ou deux moteurs électriques, voire de deux pistons ou deux vérins. Dans le cas de figure représenté à la figure 1, il est représenté un premier moyen d'entraînement 6 faisant partie de la première optique A et un second moyen d'entraînement 7 faisant partie de la seconde optique B. De préférence, chaque moyen d'entraînement 6, 7 est commandé par une unité de contrôle 2 reliée à une source d'alimentation continue Vdd. Cette source d'alimentation électrique est de préférence une source de tension continue, qui provient d'une batterie rechargeable ou primaire, ou qui est extraite et redressée d'un rayonnement électromagnétique reçu.

Chaque moyen d'entraînement 6, 7 peut agir sur l'agencement de lentilles et miroirs de l'optique A ou B, ou directement sur chaque source de lumière 16, 17 pour orienter le faisceau de lumière généré par chaque source de lumière activée. De manière à pouvoir orienter par exemple directement les sources de lumière 16, 17 des optiques A, B, chaque moyen d'entraînement 6, 7 peut comprendre deux moteurs. Ainsi les sources de lumière 16, 17 peuvent être entraînées en rotation par chaque moyen d'entraînement 6, 7 contrôlé par l'unité de contrôle 2 autour de deux axes de rotation X, Y perpendiculaires l'un par rapport à l'autre. Le faisceau de lumière généré dans chaque optique A, B est orienté ou dirigé selon une direction Z perpendiculaire aux axes X, Y.

Le dispositif 1 d'éclairage comprend encore un ou plusieurs capteurs 3, 4a, 4b, 5a, 5b, 5c reliés à l'unité de contrôle 2 pour permettre l'activation de chaque source de lumière 16, 17 selon un paramètre mesuré. De préférence, l'unité de contrôle 2, alimenté par la source de tension continue Vdd, est agencée, dès l'utilisation du véhicule, pour contrôler l'éclairage de la ou des sources de lumière 16, 17 des première et seconde optiques A, B de manière automatique.

L'unité de contrôle 2 peut comprendre encore un oscillateur à basse fréquence, qui peut être un oscillateur à quartz horloger ou MEMS, et au moins une mémoire volatile ou non volatile. La mémoire volatile ou non volatile non représentée permet de mémoriser des mesures effectuées par le ou les capteurs et au moins un algorithme de calcul pour la gestion et les calculs des mesures effectuées par les capteurs 3, 4a, 4b, 5a, 5b, 5c. L'unité de contrôle 2 peut être une unité de calcul, tel qu'un processeur ou microcontrôleur pour pouvoir traiter tous les signaux reçus du ou des capteurs de mesure.

Le dispositif 1 d'éclairage comprend principalement un capteur d'intensité lumineuse ou capteur de lumière 3, qui peut être composé d'une cellule solaire ou d'un réseau de cellules solaires. A partir d'un seuil de luminosité détecté par le capteur d'intensité lumineuse 3, l'unité de contrôle 2 commande l'activation d'au moins la seconde source de lumière 17 de la seconde optique B pour une illumination à courte distance. Le seuil d'intensité lumineuse peut dépendre directement de la luminosité ambiante où se situe le véhicule en utilisation. De plus, l'intensité lumineuse de la seconde source de lumière 17 activée est variable et inversement proportionnelle au changement d'intensité de la luminosité ambiante.

Dans une première variante de forme d'exécution du dispositif 1, le dispositif 1 d'éclairage comprend au moins un capteur de vitesse 4a, 4b relié à l'unité de contrôle 2. Lors de l'utilisation du véhicule, le capteur de vitesse 4a, 4b détermine la vitesse du véhicule et à partir du dépassement d'un seuil de vitesse déterminé commande l'activation de la première source de lumière 16 de la première optique A. La première source de lumière 16 génère de la lumière, si l'intensité de lumière ambiante détectée par le capteur de lumière 3 est inférieure à un seuil de lumière déterminé. La seconde source de lumière 17 de la seconde optique B est activée indépendamment de la vitesse du véhicule calculée, c'est-à-dire dès le moment où l'intensité de lumière ambiante détectée par le capteur de lumière 3 est inférieure au seuil de lumière déterminé.

Le capteur de vitesse peut être un récepteur GPS ou équivalent 4a ou de préférence un capteur magnétique 4b pour capter le passage d'au moins un aimant permanent disposé sur un rayon ou la jante d'une roue du véhicule. Chaque impulsion magnétique de passage de l'aimant permanent à proximité du capteur magnétique 4b, et selon une cadence dans le temps générée par l'oscillateur basse fréquence, permet à l'unité de contrôle 2 de calculer la vitesse et le moment du dépassement du seuil de vitesse déterminé.

Le dispositif 1 d'éclairage peut comprendre encore ou recevoir un calendrier 3' des dates et heures (éphémérides) de chaque mois dans l'année d'un lieu d'utilisation du dispositif, à partir de laquelle la luminosité ambiante est jugée insuffisante. L'unité de contrôle 2 peut mémoriser ce calendrier 3' du lieu déterminé d'utilisation du dispositif pour contrôler l'activation des sources de lumière 16, 17 des optiques A, B, si par exemple le seuil de vitesse déterminé est aussi dépassé. Ce seuil de vitesse déterminé peut être fixé à 15 km/h ou 25 km/h, mais peut être défini à une autre valeur et mémorisé.

Pour ce faire, il est prévu un premier variateur 10 connecté à la source de tension d'alimentation Vdd, qui est relié à un premier interrupteur 8, qui est lui-même relié à la première source de lumière 16. Le premier interrupteur 8 est commandé par l'unité de contrôle 2 pour activer la première source de lumière 16, si l'intensité de lumière ambiante est insuffisante. Un second variateur 11, qui est connecté à la source de tension d'alimentation Vdd, est prévu et relié à un second interrupteur 9, qui est lui-même relié à la seconde source de lumière 17 de la seconde optique B. Ce second interrupteur 9 est commandé par l'unité de contrôle 2 pour activer la seconde source de lumière 17, si l'intensité de lumière ambiante est insuffisante.

Les premier et second interrupteurs 8, 9 sont de préférence des transistors MOS, tels que des transistors PMOS comme représentés, mais des transistors NMOS peuvent aussi être envisagés. La source du premier transistor PMOS 8 est reliée au premier variateur 10, alors que la source du second transistor PMOS 9 est reliée au second variateur 11. La grille du premier transistor PMOS 8 est reliée à l'unité de contrôle 2 pour le rendre conducteur lors de l'activation de la première source de lumière 16, ou non conducteur pour ne pas activer la première source de lumière 16. La grille du second transistor PMOS 9 est reliée à l'unité de contrôle 2 pour le rendre conducteur lors de l'activation de la seconde source de lumière 17 ou non conducteur pour ne pas activer la seconde source de lumière 17.

Il est à noter que chaque variateur 10, 11 peut être une source de courant, dont le courant prévu pour passer dans chaque source de lumière est variable et augmente quand l'intensité de lumière ambiante diminue en dessous du seuil de lumière déterminé. La variation du courant de chaque variateur est contrôlée directement par l'unité de contrôle 2.

Dans une seconde variante de forme d'exécution du dispositif 1, le dispositif 1 d'éclairage comprend au moins un détecteur d'orientation ou d'inclinaison 5a, 5b, 5c relié à l'unité de contrôle 2. Lors de l'utilisation du véhicule, le détecteur d'orientation ou d'inclinaison 5a, 5b, 5c détermine par exemple une courbe effectuée par le véhicule en utilisation sur un chemin ou une route. Le détecteur d'orientation ou d'inclinaison 5a, 5b, 5c fournit un signal d'orientation à l'unité de contrôle 2, qui commande les premier et second moyens d'entraînement 6, 7. Ces premier et second moyens d'entraînement 6, 7 permettent d'orienter le ou les faisceaux de lumière générés par la ou les sources de lumière 16, 17 de la première optique A et/ou de la seconde optique B dépendant d'une courbe effectuée par le véhicule en utilisation sur un chemin ou une route. L'orientation des faisceaux des sources de lumière 16, 17 est telle que, lors d'un virage à droite, les faisceaux de lumière sont orientés vers la droite, et inversement lors d'un virage à gauche.

On peut imaginer dans cette seconde variante d'avoir les deux sources de lumière 16, 17 activées dès que l'intensité de la lumière ambiante est en dessous d'un seuil de lumière déterminé. Cependant il peut aussi être prévu d'activer uniquement la seconde source de lumière 17, si la vitesse détectée par le capteur de vitesse 4a, 4b ne dépasse pas le seuil de vitesse déterminé. De plus, il peut être prévu que les premier et second moyens d'entraînement 6, 7 orientent directement les première et seconde sources de lumière 16, 17 des optiques A et B.

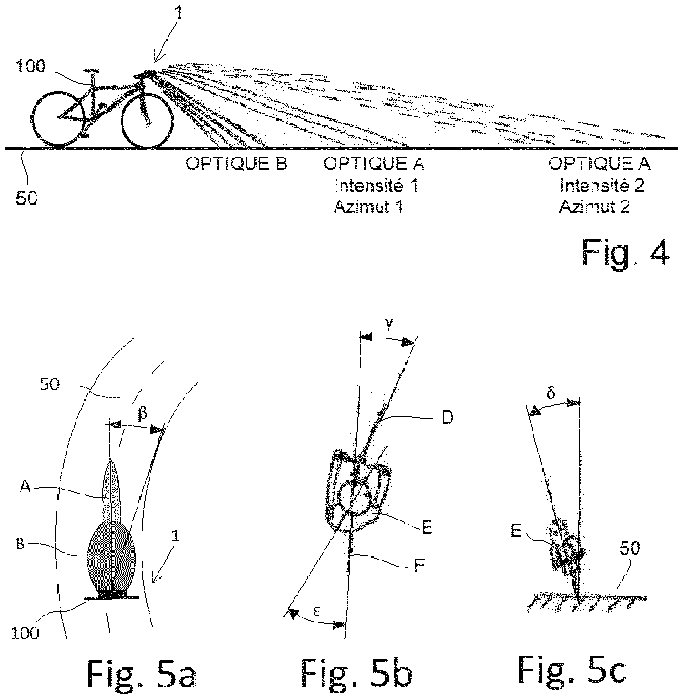

Le détecteur d'orientation peut être composé d'un potentiomètre 5a et/ou d'un magnétomètre 5b et/ou d'un inclinomètre 5c et/ou d'un accéléromètre 5c et/ou d'un gyromètre 5c comme il sera encore expliqué ci-après en référence aux figures 5a à 5c.

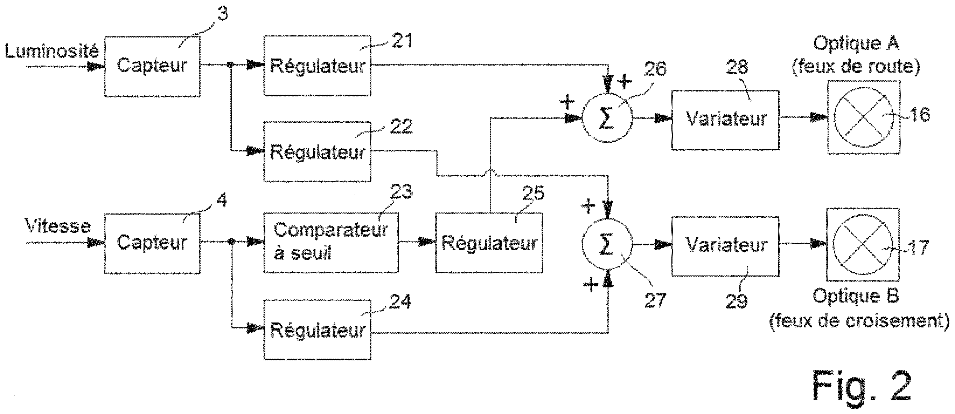

La figure 2 représente la première variante de forme d'exécution du dispositif d'éclairage actif pour l'activation des sources de lumière 16, 17 des deux optiques A et B en fonction de la vitesse du véhicule sur une route ou un chemin selon l'invention.

Pour simplifier, il est prévu le capteur de lumière 3, qui fournit un signal à un premier régulateur 21 et à un second régulateur 22 de l'unité de contrôle dans une boucle d'intensité lumineuse. Il est encore prévu le capteur de vitesse 4, qui fournit un signal de vitesse à un comparateur de seuil de vitesse 23 et à un troisième régulateur 24 de l'unité de contrôle. Le comparateur 24 fournit un signal de comparaison à un quatrième régulateur 25 de l'unité de contrôle. L'état du signal de comparaison est soit dans un premier état pour commander l'activation de la première source de lumière 16 de l'optique A, soit dans un second état pour commander la non activation de la première source de lumière 16 de l'optique A. Un premier additionneur 26 est prévu pour additionner le signal de sortie du premier régulateur 21 et le signal de sortie du quatrième régulateur 25, et un second additionneur 27 est prévu pour additionner le signal de sortie du second régulateur 22 et le signal de sortie du troisième régulateur 24. Le signal de sortie du premier additionneur 26 commande un premier variateur 28 pour varier l'intensité lumineuse de la première source de lumière 16 de la première optique A si activée. Le signal de sortie du second additionneur 27 commande un second variateur 29 pour varier l'intensité lumineuse de la seconde source de lumière 17 de la seconde optique B toujours activée, si l'intensité de la lumière ambiante est en dessous d'un seuil de lumière déterminé.

L'intensité lumineuse de la première source de lumière 16 est donc déterminée comme la somme du premier régulateur 21 inversement proportionnel à la luminosité ambiante, et du quatrième régulateur 25 proportionnel à la vitesse de déplacement du véhicule. Cependant la première source de lumière 16 n'est activée que lorsqu'un seuil de vitesse déterminé par l'utilisateur est dépassé par exemple 25 km/h avec hystérèse.

L'intensité lumineuse de la seconde source de lumière 17 est donc déterminée comme la somme du second régulateur 22 inversement proportionnel à la luminosité ambiante, et du troisième régulateur 24 proportionnel à la vitesse de déplacement du véhicule. Dans ce cas de figure, la seconde source de lumière 27 est toujours activée indépendamment de la vitesse mesurée, si l'intensité de lumière ambiante est en dessous d'un seuil de lumière déterminé.

Bien entendu, lorsque le véhicule n'est plus en utilisation, il peut aussi être prévu un interrupteur manuel de manière à désactiver le dispositif d'éclairage avec toutes les sources de lumière. Lesdites sources de lumière peuvent être aussi désactivées après une période d'inutilisation du véhicule, c'est-à-dire après un temps déterminé sans mouvement par exemple après 5 minutes.

En comparaison à ce qui a été décrit en référence à la figure 1, on peut considérer que les variateurs 28, 29 de la figure 2 sont similaires à ceux de la figure 1, mais chaque variateur peut être relié à chaque source de lumière 16, 17 par un interrupteur respectif contrôlé par l'unité de contrôle.

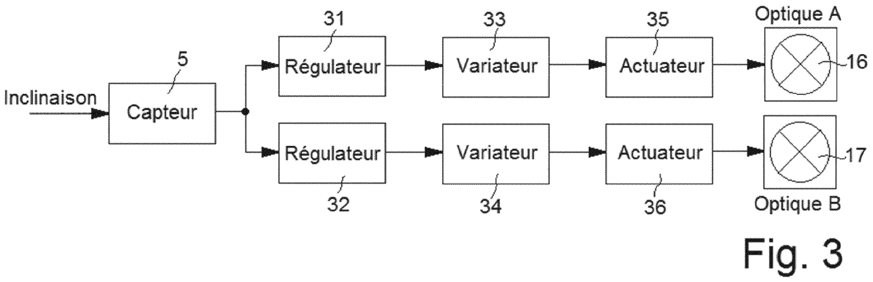

La figure 3 représente une seconde variante de forme d'exécution du dispositif d'éclairage actif pour l'orientation des sources de lumière 16, 17 des optiques A et B lors de la prise d'un virage sur une route ou un chemin selon l'invention. Bien entendu, il est aussi prévu en parallèle un contrôle de la lumière ambiante par un capteur de lumière pour varier l'intensité de lumière des sources de lumière 16, 17, qui sont activées, inversement proportionnelle à la l'intensité de la lumière ambiante.

Pour simplifier dans cette boucle de trajectoire, il est prévu au moins un détecteur d'orientation ou d'inclinaison 5, qui fournit un signal à un premier régulateur 31 et à un second régulateur 32. Le premier régulateur 31 fournit un signal de sortie à un premier variateur de tension 33, et le second régulateur 32 fournit un signal de sortie à un second variateur de tension 34. Le premier variateur de tension 33 contrôle un premier actuateur 35, qui est au moins un moteur électrique. Ce premier actuateur 35 reçoit des signaux de commande du premier variateur 33, tels que des signaux à modulation de largeur d'impulsion (PWM) pour déplacer ou orienter par exemple la première source de lumière 16 de la première optique A. Le second variateur de tension 34 contrôle un second actuateur 36, qui est au moins un moteur électrique. Ce second actuateur 36 reçoit des signaux de commande du second variateur 34, tels que des signaux à modulation de largeur d'impulsion (PWM) pour déplacer ou orienter par exemple la seconde source de lumière 17 de la seconde optique B.

La figure 4 représente schématiquement un véhicule 100 sur une route 50 ou un chemin avec les sources de lumière activées des deux optiques A et B du dispositif 1 d'éclairage actif. Les deux sources de lumière sont activées, si la vitesse du véhicule est au-dessus d'un seuil de vitesse déterminé et si l'intensité de lumière ambiante est insuffisante, sinon uniquement la seconde source de lumière de l'optique B est activée. Ainsi, l'intensité de lumière I_{LUM}(v, I_{AMB}) de la première source de lumière de l'optique A dépend de la vitesse v du véhicule 100, qui peut être un vélo, et de l'intensité lumineuse ambiante I_{AMB}. L'intensité de lumière I_{LUM}(I_{AMB}) de la seconde source de lumière de l'optique B ne dépend que de l'intensité lumineuse ambiante I_{AMB}.

Comme montré à la figure 4, il peut encore être prévu, que plus la vitesse du véhicule augmente, et plus le faisceau de lumière de la première source de lumière de l'optique A augmente en intensité lumineuse. De plus, le premier moyen d'entraînement de l'optique A oriente ladite source de lumière pour éclairer encore plus loin jusqu'à un azimut vertical, qui tend vers 0. L'intensité lumineuse de chaque source de lumière peut varier proportionnellement à l'inverse de l'intensité de lumière ambiante, voire également par palier.

Les figures 5a, 5b, 5c montrent schématiquement un véhicule 100 sur une route 50 ou un chemin prenant un virage pour orienter les sources de lumière des optiques A et B du dispositif 1 d'éclairage actif. Chaque optique A, B peut être montée par exemple sur un guidon du vélo 100. Le ou les détecteurs d'orientation ou d'inclinaison sont par exemple un magnétomètre 5b ou un inclinomètre 5c ou un accéléromètre 5c ou un gyromètre 5c ou un potentiomètre 5a ou une combinaison de ces détecteurs comme précédemment mentionné.

Le détecteur d'orientation ou d'inclinaison peut être monté sur un support, tel qu'un casque de l'utilisateur E du véhicule 100 et pour fournir un signal d'orientation par une communication bidirectionnelle sans fil à l'unité de contrôle disposée sur le guidon du véhicule 100. Ceci permet de contrôler l'orientation de la ou des sources de lumière par un mouvement de la tête de l'utilisateur E du véhicule 100.

A la figure 5a, les deux sources de lumière des optiques A et B du dispositif 1 d'éclairage sont activées, et doivent être orientées par les moyens d'entraînement sur commande de l'unité de contrôle selon un angle β en fonction du virage effectué sur la route 50.

A la figure 5b, l'unité de contrôle tient compte d'un angle de rotation γ de la roue avant D du vélo et aussi du mouvement angulaire ε de la tête de l'utilisateur E du vélo par rapport à la direction de la roue arrière F.

A la figure 5c, il peut aussi être tenu compte de l'inclinaison du vélo avec l'utilisateur E d'un angle δ par rapport à la route 50 pour orienter les sources de lumière.

A partir de la description qui vient d'être faite, plusieurs variantes de réalisation d'un dispositif d'éclairage actif portable ou placé sur un véhicule à au moins une roue sont possibles sans sortir du cadre de l'invention définie par les revendications suivantes.

## Revendications

1. Dispositif (1) d'éclairage actif portable ou disposé sur un véhicule (100) à au moins une roue,
**caractérisé en ce que** le dispositif comprend:
- au moins une source d'alimentation électrique (Vdd),
- une première optique (A) avec au moins une première source de lumière (16) à intensité variable pour une illumination à grande distance, ladite première source de lumière (16) étant contrôlée par une unité de contrôle (2) reliée à la source d'alimentation électrique (Vdd),
- une seconde optique (B) avec au moins une seconde source de lumière (17) à intensité variable pour une illumination à courte distance, ladite seconde source de lumière (17) étant contrôlée par l'unité de contrôle (2) reliée à la source d'alimentation électrique (Vdd),
- un capteur de lumière (3) pour déterminer l'intensité lumineuse d'un endroit où se situe le véhicule (100) avec le dispositif (1) d'éclairage et pour fournir un signal de mesure à l'unité de contrôle (2), qui est agencée pour adapter l'intensité lumineuse de la ou des sources de lumière (16, 17) de la première optique (A) et/ou de la seconde optique (B) si l'intensité de lumière ambiante est en dessous d'un seuil de lumière déterminé, et
- un capteur de vitesse (4a, 4b) pour déterminer la vitesse du véhicule (100) en utilisation sur un chemin ou une route, et pour fournir un signal de mesure à l'unité de contrôle (2) pour commander l'activation de la première source de lumière (16) de la première optique (A) à partir d'au moins un seuil de vitesse déterminé.

2. Dispositif (1) d'éclairage actif portable ou disposé sur un véhicule à au moins une roue,
**caractérisé en ce que** le dispositif comprend :
- au moins une source d'alimentation électrique (Vdd),
- une première optique (A) avec au moins une première source de lumière (16) à intensité variable pour une illumination à grande distance, et avec un premier moyen d'entraînement (6) contrôlé par une unité de contrôle (2) reliée à la source d'alimentation électrique (Vdd) pour orienter un faisceau de lumière généré par la première source de lumière (16),
- une seconde optique (B) avec au moins une seconde source de lumière (17) à intensité variable pour une illumination à courte distance, et avec un second moyen d'entraînement (7) contrôlé par l'unité de contrôle (2) reliée à la source d'alimentation électrique (Vdd) pour orienter un faisceau de lumière généré par la seconde source de lumière (17),
- un capteur de lumière (3) relié à l'unité de contrôle (2) pour déterminer l'intensité lumineuse d'un endroit où se situe le véhicule (100) avec le dispositif (1) d'éclairage et qui est agencée pour adapter l'intensité lumineuse de la ou des sources de lumière (16, 17) de la première optique (A) et/ou de la seconde optique (B), si l'intensité de lumière ambiante est en dessous d'un seuil de lumière déterminé, et
- un détecteur d'orientation (5a, 5b, 5c) pour fournir un signal d'orientation à l'unité de contrôle (2), qui commande les premier et second moyens d'entraînement (6, 7) pour orienter le ou les faisceaux de lumière générés par la ou les sources de lumière (16, 17) de la première optique (A) et/ou de la seconde optique (B) dépendant d'une courbe effectuée par le véhicule (100) en utilisation sur un chemin ou une route.

3. Dispositif (1) selon l'une des revendications précédentes, **caractérisé en ce que** l'unité de contrôle (2) est agencée, dès l'utilisation du véhicule, pour contrôler l'éclairage de la ou des sources de lumière (16, 17) des première et seconde optiques (A, B) de manière automatique.

4. Dispositif (1) selon la revendication 1, **caractérisé en ce qu'**un premier moyen d'entraînement (6) est prévu pour la première optique (A) pour orienter un faisceau de lumière généré par la première source de lumière (16).

5. Dispositif (1) selon la revendication 1, **caractérisé en ce qu'**un second moyen d'entraînement (7) est prévu pour la seconde optique (B) pour orienter un faisceau de lumière généré par la seconde source de lumière (17).

6. Dispositif (1) selon l'une des revendications 4 et 5, **caractérisé en ce que** le dispositif comprend un détecteur d'orientation (5a, 5b, 5c) pour fournir un signal d'orientation à l'unité de contrôle (2) pour orienter des faisceaux de lumière générés par la ou les sources de lumière (16, 17) de la première optique (A) et/ou de la seconde optique (B) dépendant d'une courbe effectuée par le véhicule (100) en utilisation sur un chemin ou une route.

7. Dispositif (1) selon l'une des revendications 2, 4 et 5, **caractérisé en ce que** le premier moyen d'entraînement (6) est prévu pour orienter directement la première source de lumière (16), et **en ce que** la second moyen d'entraînement (7) est prévu pour orienter directement la seconde source de lumière (17).

8. Dispositif (1) selon la revendication 2, **caractérisé en ce qu'**il comprend un capteur de vitesse (4a, 4b) pour déterminer la vitesse du véhicule (100) en utilisation sur un chemin ou une route, et pour fournir un signal de mesure à l'unité de contrôle (2) pour commander l'activation de la première source de lumière (16) de la première optique (A) à partir d'au moins un seuil de vitesse déterminé.

9. Dispositif (1) selon l'une des revendications 1 et 2, **caractérisé en ce que** l'unité de contrôle (2) est agencée pour adapter progressivement l'intensité lumineuse de la ou des sources de lumière (16, 17) de la première optique (A) et/ou de la seconde optique (B) en étant inversement proportionnelle à l'intensité de lumière ambiante captée par le capteur de lumière (3).

10. Dispositif (1) selon l'une des revendications 1 et 2, **caractérisé en ce que** l'unité de contrôle (2) est agencée pour adapter par paliers l'intensité lumineuse de la ou des sources de lumière (16, 17) de la première optique (A) et/ou de la seconde optique (B) par rapport à l'intensité de lumière ambiante captée par le capteur de lumière (3).

11. Dispositif (1) selon l'une des revendications 1 et 2, **caractérisé en ce que** l'unité de contrôle (2) est un microcontrôleur ayant une mémoire dans laquelle sont mémorisées des dates et heures du jour de l'endroit où se trouve le dispositif (1) d'éclairage pour permettre le fonctionnement de la ou des sources de lumière (16, 17) des première et seconde optiques (A, B) à partir d'une certaine heure de la journée d'une date donnée.

12. Dispositif (1) selon l'une des revendications 1 et 8, **caractérisé en ce que** le capteur de vitesse (4a, 4b) est composé d'un récepteur GPS (4a) ou d'un capteur magnétique (4b) monté sur une fourche d'une roue du véhicule (100) pour détecter le passage d'un aimant permanent monté sur un rayon ou une jante de la roue afin de déterminer la vitesse du véhicule (100) .

13. Dispositif (1) selon l'une des revendications 2 et 6, **caractérisé en ce que** le détecteur d'orientation (5a, 5b, 5c) est composé d'un magnétomètre (5b) et/ou d'un inclinomètre (5c) et/ou d'un accéléromètre (5c) et/ou d'un gyromètre (5c) et/ou d'un potentiomètre (5a).

14. Dispositif (1) selon l'une des revendications 2 et 6, **caractérisé en ce que** le détecteur d'orientation (5a, 5b, 5c) est agencé pour être monté sur un support, tel qu'un casque du conducteur (E) du véhicule (100) et pour fournir un signal d'orientation ou d'inclinaison par une communication bidirectionnelle sans fil à l'unité de contrôle (2) disposée sur le véhicule (100) avec les première et seconde optiques (A, B) de manière à contrôler l'orientation de la ou des sources de lumière (16, 17) par un mouvement de la tête du conducteur (E) du véhicule (100).
